# EUROPEAN PATENT APPLICATION

(11) **EP 4 667 145 A1**
(43) Date of publication of application: **24.12.2025**
(21) Application number: 25183579.9
(22) Date of filing: 18.06.2025
(51) Int. Cl.: B23C 5/10

(54) **CUTTING TOOL**

(30) Priority: 19.06.2024 JP 2024099145
(71) Applicant: Tungaloy Corporation, Iwaki-shi, Fukushima 970-1144 (JP)
(72) Inventor: YOSHIDA, Tomoha, Iwaki-shi, Fukushima, 9701144 (JP)
(74) Representative: Vossius & Partner Patentanwälte Rechtsanwälte mbB

(57) **Abstract**

The present disclosure provides a cutting tool that comprises: an end cutting edge that is formed so as to extend radially from the central axis side; a peripheral edge that forms a pair of cutting edges with the end cutting edge; and a chip discharge groove provided around the central axis. The chip discharge groove is formed by two or more grooves that include at least a major groove and a minor groove and have different helix angles from each other. The major groove that forms the peripheral edge on an edge between a peripheral side surface of the cutting tool and such major groove has a helix angle α that is the smallest helix angle, and the minor groove that is in contact with the major groove and arranged with its phase shifted forward with respect to the major groove in a tool rotating direction has a helix angle β that is greater than the helix angle α of the major groove.

## Description

### Background

### Field

The present disclosure relates to a cutting tool.

### Description of Related Art

In a rotary cutting tool (milling tool), such as an end mill, which comprises a side edge provided on a side surface of the cutting tool (which will be referred to as a "peripheral edge" in the present specification) and an end cutting edge provided on a leading end surface of the cutting tool, chattering resistance during groove machining or wall surface machining, as well as chip control during hole making by plunging, are important; therefore, it is important to achieve a good balance between the chattering resistance and chip control of such milling tool, in order to maximize the cutting performance thereof. However, these two properties (i.e., the chattering resistance and the chip control) may contradict each other, depending on the design of a chip discharge groove formed around a tool rotational axis. More specifically, the chattering resistance of a milling tool can generally be improved by increasing the stiffness of such cutting tool, and it can be considered effective to design the chip discharge groove so as to have a small cross-sectional area and increase the core thickness of such tool, in order to increase the stiffness of the tool. However, such attempt will sacrifice and degrade the chip control and cause chip clogging, particularly in groove machining or plunging in which a sufficient space cannot be secured between the cutting tool and a machined wall surface of a workpiece (work material).

Hence, as a tool capable of ensuring both the chattering resistance and the chip control, an end mill has conventionally been proposed, in which a chip discharge groove, which is provided in a pair with a cutting edge, is constituted by a first edge groove surface and a second edge groove surface (see, for example, JP4936495 B). Here, the helix angle of the chip discharge groove that forms an axial rake angle of a peripheral edge is set so as to be from 40° to 60°, so that the cut thickness in machining by the peripheral edge becomes thin, to thereby reduce the cutting resistance. In addition, the above-described first edge groove surface and second edge groove surface is arranged so as to form an obtuse angle, so that a large cross-sectional area of the cutting tool can be secured, to thereby prevent reduction in the stiffness of such cutting tool. However, the arrangement of the first edge groove surface and the second edge groove surface as proposed in JP4936495 B (see Fig. 2, etc. of JP4936495 B) causes the chips to be primarily discharged along the second edge groove surface that directly forms the peripheral edge, and the first edge groove surface that forms an obtuse angle with respect to the second edge groove surface and is arranged so as to have a smaller cross-sectional area than the second edge groove surface is not effective in terms of chip control.

Furthermore, by providing an end cutting edge with, for example, a recessed part as disclosed in JP5535315 B, it is possible to cut produced chips into smaller pieces and thereby attempt to improve the chip control. However, even if the chips are cut into smaller pieces, the volume of chips produced per unit time still does not change, and the chip clogging issue will not be solved unless a sufficient cross-sectional area of the chip discharge groove is secured.

In this regard, for example, JP6693965 B discloses a technique in which a minor groove (4a) having a low helix angle with respect to a major groove (4b) that forms a peripheral edge is provided in the vicinity of an end cutting edge so as to secure a large groove cross-sectional area to thereby improve chip control for the chips produced by or near the end cutting edge. However, in such groove configuration, the minor groove having such low helix angle has no other option but to gradually bite into a circumferential flank of the peripheral edge that is located ahead of the minor groove in the rotating direction and formed by the major groove, as the groove length increases (see Fig. 7, etc. of JP6693965 B). This constitutes a factor that will lower the stiffness of the peripheral edge and cause chattering during machining. In addition, this is the reason why the minor groove having the same length as the major groove cannot be provided. That is to say, according to the groove configuration disclosed in JP6693965 B, although the chip control can be improved for the machining depth up to the same depth as the groove length of the minor groove, the cross-sectional area of the chip discharge groove becomes remarkably smaller when the machining depth exceeds the groove length where only the major groove is arranged; and good chip control can therefore not be expected. In particular, in the case of plunging which requires a machining depth that is greater than the length of the minor groove, chip clogging is likely to occur.

As described above, in a cutting tool such as an end mill, it is difficult to achieve a good balance between the chattering resistance and the chip control, and, in particular, there is a problem in chip control in an aspect where plunging is performed using a tool such as an end mill, which can be considered to have room for improvement.

### Summary

An object of the present disclosure is to provide a cutting tool that improves chip control particularly in plunging, while paying attention to the stiffness, so as to achieve a better-than-ever balance between the chattering resistance and the chip control.

In order to achieve the above object, the inventors of the present disclosure have conducted intensive studies while paying attention to the above-described conventional problems and focusing on the structure of chip discharge grooves and components therearound, to thereby acquire new findings. The present disclosure has been made based on such findings, and an aspect of the present disclosure provides a cutting tool that rotates around a central axis, the cutting tool comprising: an end cutting edge that is formed so as to extend from a side of the central axis in a radial direction of the cutting tool, in a leading end-side view which is viewed from a leading end of the cutting tool; a peripheral edge that forms a pair of cutting edges with the end cutting edge, the peripheral edge extending from the leading end toward a base end of the cutting tool; and a chip discharge groove provided around the central axis, wherein the chip discharge groove is formed by two or more grooves that include at least a major groove and a minor groove and have different helix angles from each other, wherein the major groove that forms the peripheral edge on an edge between a peripheral side surface of the cutting tool and such major groove has a smallest helix angle, and the minor groove that is in contact with the major groove and arranged with its phase shifted forward with respect to the major groove in a tool rotating direction has a helix angle that is greater than the helix angle of the major groove.

According to the cutting tool described above, even if the length of the chip discharge groove is set so as to be relatively long, the minor groove still will not interfere with a circumferential flank of the peripheral edge that is located ahead of such minor groove in the tool rotating direction. The stiffness of the peripheral edge is affected by a thickness formed by the major groove that forms the peripheral edge and the minor groove that is arranged behind the peripheral edge in the rotating direction. In the cutting tool as described above, such thickness can be maintained so as to have a certain value or greater in a range from a leading end to a base end of the peripheral edge. Thus, even in the case of machining in which the cutting depth is large, it is still possible to suppress the generation of chattering during machining. In addition, since the length of the minor groove can be set so as to be long, it becomes possible to secure a large cross-sectional area of the chip discharge groove even at a base end part of the peripheral edge. Therefore, good chip control can be achieved even in machining with a large cutting depth in which the peripheral edge is used to the maximum extent of its length.

In the above-described cutting tool, an (n+1)^{-th} minor groove that is in contact with an n^{th} minor groove and arranged with its phase shifted further forward with respect to the n^{th} minor groove in the tool rotating direction may have a helix angle that is greater than a helix angle of the n^{th} minor groove, wherein n is a natural number.

In the above-described cutting tool, the end cutting edge and the peripheral edge may be connected to each other by a corner cutting edge that is constituted by a curved cutting edge.

In the above-described cutting tool, the end cutting edge and the peripheral edge may be connected to each other by a corner cutting edge that is constituted by a chamfered cutting edge.

In the above-described cutting tool, the end cutting edge may extend rearward from a leading end side toward a base end side of the cutting tool as it extends from a peripheral side of the cutting tool toward a center of the cutting tool, in a side view in which the end cutting edge oriented with its rake surface located in front is viewed from a direction perpendicular to the central axis.

In the above-described cutting tool, the end cutting edge may be formed so as not to extend beyond the central axis in the leading end-side view.

In the above-described cutting tool, the end cutting edge may extend linearly in the radial direction in the leading end-side view.

In the above-described cutting tool, the end cutting edge may extend in a concave shape along the radial direction in the leading end-side view.

In the above-described cutting tool, the head may be removably mountable to a shank.

### Brief Description of Drawings

Fig. 1 is a perspective view showing an example of an end mill as viewed from a leading end side thereof, in an embodiment of a cutting tool according to the present disclosure.
Fig. 2 is a diagram showing the end mill shown in Fig. 1, as viewed from the leading end side thereof.
Fig. 3 is a diagram showing the cross-sectional shape of the end mill at a distance corresponding to 50% of a tool diameter from the leading end surface of the tool along a central axis.
Fig. 4 is a cross-sectional view which shows a comparison between the shapes of the end mill before and after the formation of a minor groove.
Fig. 5 is a diagram for explaining the characteristics of an end mill according to an embodiment of the present disclosure.
Fig. 6 is a diagram showing a modification of an end mill (an example in which a chip discharge groove is constituted by one major groove and two minor grooves), as viewed from a lateral side thereof.
Fig. 7 is a perspective view showing the modification of the end mill (the example in which a chip discharge groove is constituted by one major groove and two minor grooves), as viewed from a leading end side thereof.

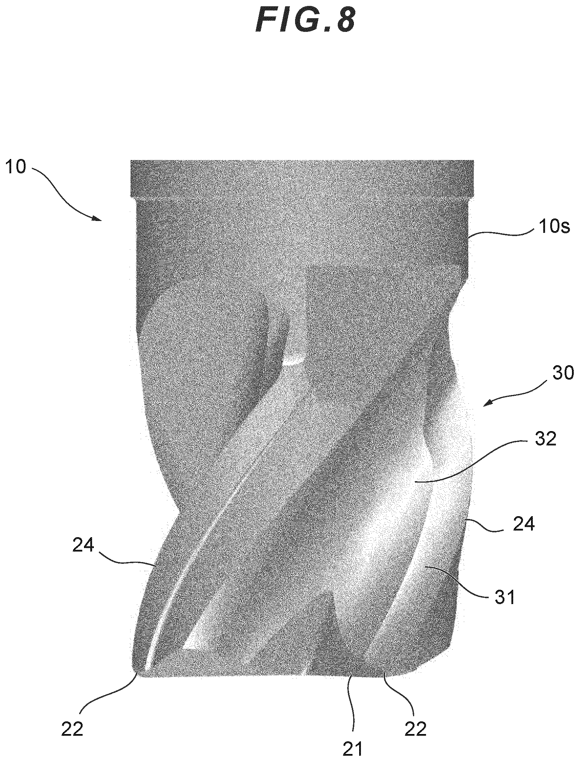

Fig. 8 is a diagram showing an end mill as viewed from a lateral side thereof.

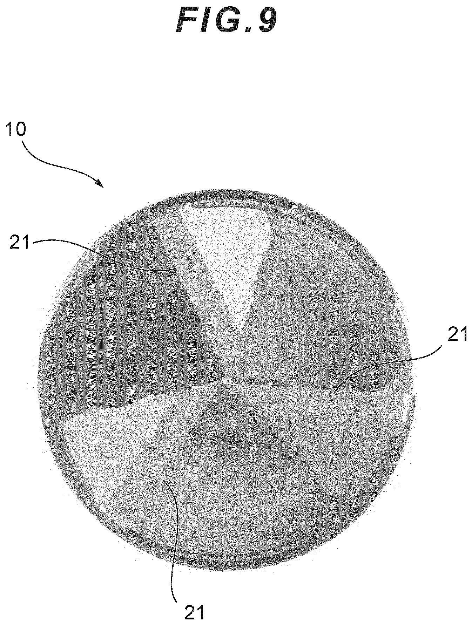

Fig. 9 is a diagram showing the end mill of Fig. 8 as viewed from a leading end side thereof.
Fig. 10 is a diagram showing a shape of an example of an end mill with its rake surface located in front.
Fig. 11 is a diagram showing an example of a cutting tool that has a leading end portion formed of cemented carbide insert and that is removably mountable to a shank.

### Detailed Description

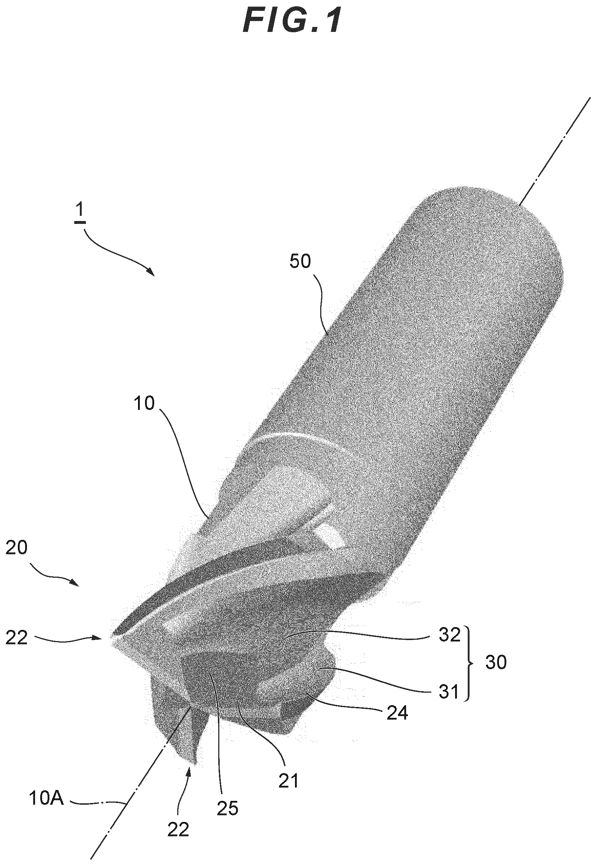

Preferred embodiments of a cutting tool according to the present disclosure will now be described in detail below, with reference to the attached drawings (see Fig. 1, etc.). The following description will describe an end mill to which the present disclosure is applied; however, this is merely one preferred example, and the present disclosure is also applicable to other tools than the end mill which is one type of cutting tool that rotates around a rotational axis, as will be apparent from the description below.

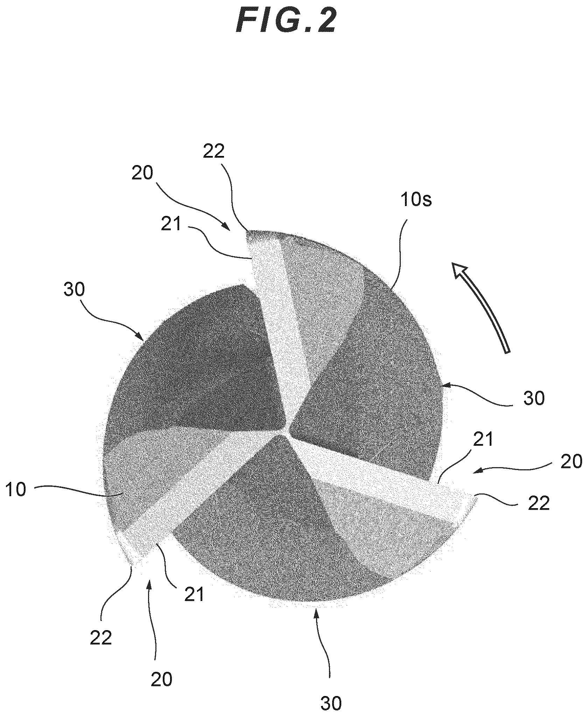

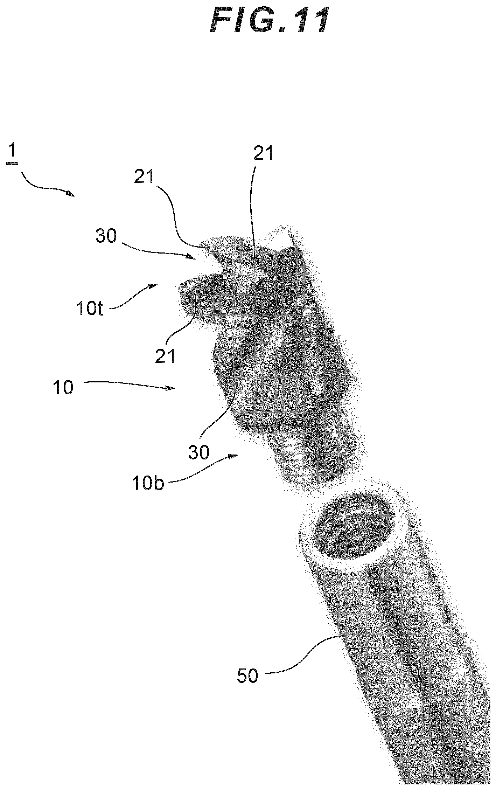

An end mill 1 is one type of cutting tool (milling tool) that performs cutting by rotating around a central axis 10A, and such end mill 1 may be constituted by, for example, a shank 50 and a replaceable head 10 that is removably mountable to the shank 50 (see Figs. 1, 11, etc.). The head 10 is provided with an end cutting edge 21, a corner cutting edge 22, a peripheral edge 24, a gash 25, and a chip discharge groove 30 (see Figs. 1, 2, etc.).

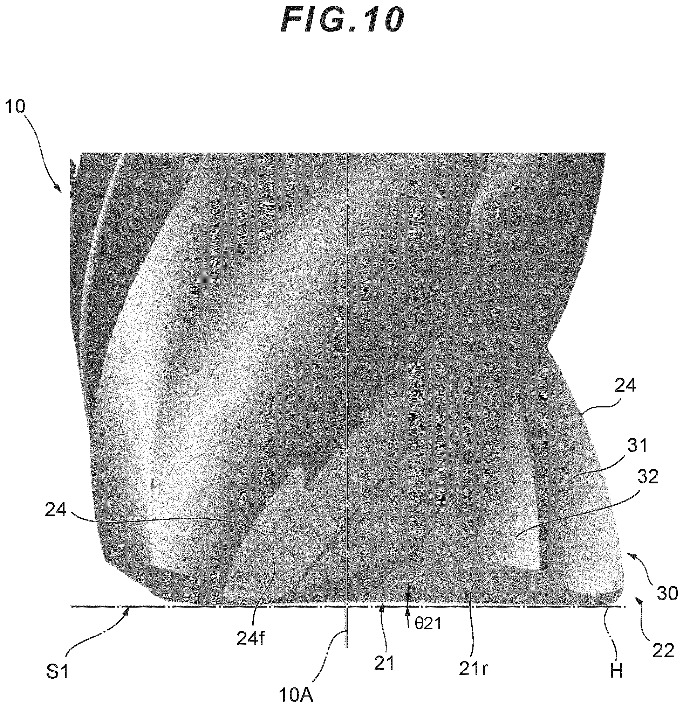

The end cutting edge 21 is an edge formed at a leading end 10t of the head 10, and is formed so as to extend from the central axis 10A in the radial direction of the head 10 in a leading end-side view viewed from the leading end 10t side (see Figs. 1 and 2). **In** other words, assuming that a surface that is perpendicular to the central axis 10A and that passes through the leading end 10t of the head 10 is referred to as a "leading end surface S1" (see Fig. 10), the end cutting edge 21 is formed so as to linearly extend from an intersection between the central axis 10A and the leading end surface S1 in the radial direction of the head 10. **In** a modification (an example in which the end cutting edge 21 does not have a linear shape), the end cutting edge 21 may extend so as to have a concave shape (the end cutting edge 21 may have a concave shape in the leading end-side view) in the radial direction. **In** such case, chips that are produced by the end cutting edge 21 will have a curved shape along the concave surface, which facilitates the discharge of such chips. Multiple (e.g., three) end cutting edges 21 are arranged at regular intervals in a circumferential direction. Although the specific shape of such end cutting edges 21 is not particularly limited, the end cutting edges 21 of the head 10 in the present embodiment are formed in a shape in which, for example, such end cutting edges 21 linearly extend in the radial direction without extending beyond the central axis 10A in the leading end-side view (see Fig. 2). In this way, since all the end cutting edges 21 are provided so as not to extend beyond the central axis 10A, all of such end cutting edges 21 can be engaged in machining of a portion near the center of a hole in, in particular, plunging, which makes it possible to prevent breakage in part of the cutting edges 21 and achieve stable machining, even under machining conditions in which high cutting feed is required. It should be noted that a head having a structure in which one out of multiple end cutting edges extends beyond the central axis in the leading end-side view would have only one end cutting edge that is engaged in machining of a portion near the central axis during plunging, whereas, in a structure in which there are three end cutting edges 21 that are engaged in machining of a portion around the central axis 10A as in the present embodiment, the load will be distributed to each of these three cutting edges 21, which easily leads to stable machining.

In addition, the end cutting edge 21 in the head 10 of the present embodiment is formed so as to extend rearward from the side of the leading end 10t toward the side of a base end 10b as it extends from the peripheral side of the tool toward the center of the tool where the central axis 10A is located, in a side view in which the head 10 is viewed from a lateral side thereof with a rake surface 21r of the end cutting edge 21 being located in front (or in a side view as viewed from a direction perpendicular to the central axis 10A) (see Fig. 10). In other words, the end cutting edge 21 is formed so as to have a positive angle θ₂₁ with respect to a line H that is perpendicular to the central axis 10A (i.e., the relief angle of the end cutting edge 21 is positive) and formed so as to extend rearward from the leading end 10t side toward the base end 10b side as it extends toward the center of the tool. By setting the angle θ₂₁ (the relief angle of the end cutting edge 21) to a positive angle, a clearance is secured between the end cutting edge 21 and a machined bottom surface, which makes it possible to obtain a desirable quality of the machined surface.

The peripheral edge 24 is formed in a helical manner on a peripheral side surface 10s of the head 10, so as to extend from the leading end 10t of the head 10 toward the base end 10b of the head 10. The peripheral edge 24 and the end cutting edge 21 are connected to each other via the corner cutting edge 22 so as to form a cutting edge 20 as a set of cutting edges or as a continuously-formed cutting edge (see Figs. 1, 2, 10, etc.). Accordingly, the number of the cutting edges 20 is the same as the respective numbers of the end cutting edges 21, the corner cutting edges 22 and the peripheral edges 24. Although the head 10 that is removably mountable to the shank 50 has been described as an example, the present disclosure is obviously also applicable to a solid end mill (i.e., an end mill having a structure in which a head and a shank are formed in an integral manner) and the like, even though this is not particularly illustrated in the drawings.

The corner cutting edge 22 is formed at a corner portion between the end cutting edge 21 and the peripheral edge 24 so as to connect them to each other (see Figs. 1, 2, etc.). Although not illustrated in particular detail, the corner cutting edge 22 may be formed so as to be curved (curved cutting edge) or formed linearly (chamfered cutting edge). Although a configuration in which the corner cutting edge 22 is provided has been described as an example, the end mill 1 may instead have a configuration in which the end cutting edge 21 and the peripheral edge 24 are formed directly continuously to each other (i.e., so as to form a so-called "sharp corner"), without the corner cutting edge being provided therebetween.

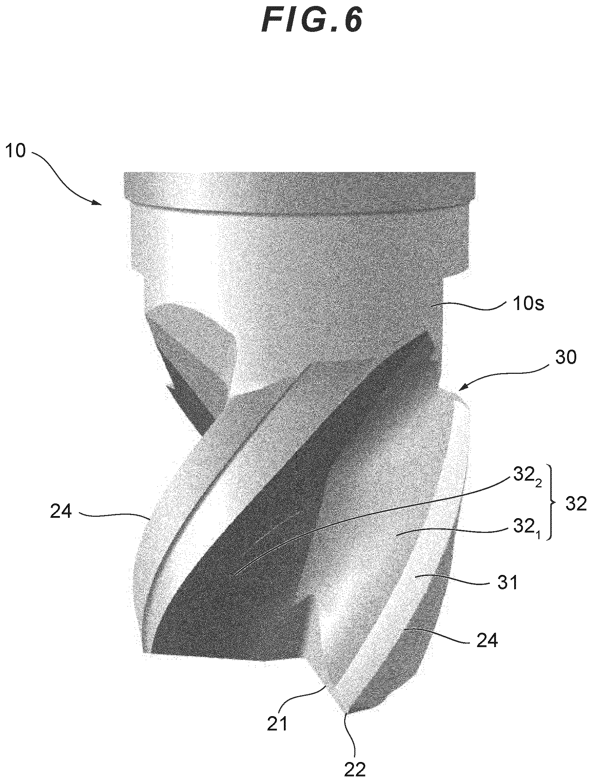

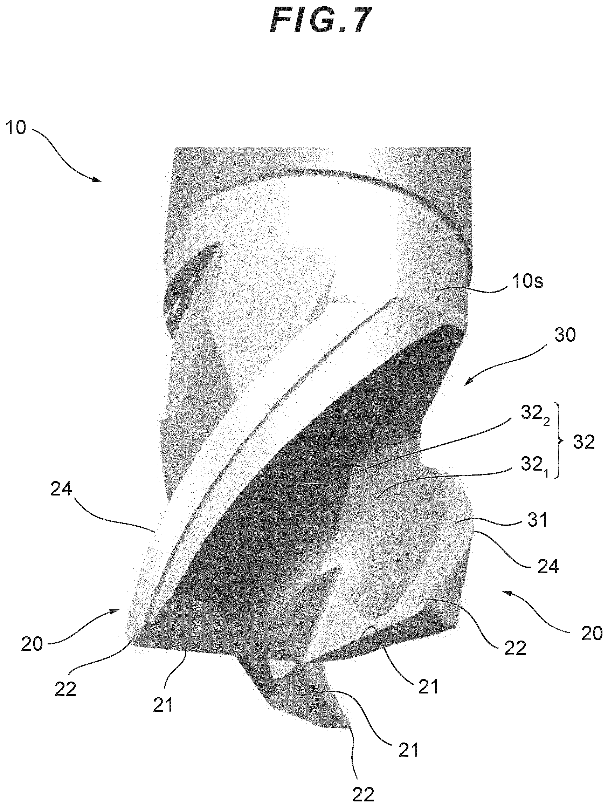

The chip discharge groove 30 is formed in a helical manner around the central axis 10A of the head 10 in order to discharge chips that are produced during cutting. The chip discharge groove 30 in the end mill 1 of the present embodiment is formed by two or more grooves including a major groove 31 and a minor groove 32. The chip discharge groove 30 is constituted by a single major groove 31 and n minor grooves 32 (with n being a natural number). The major groove 31 is arranged such that the peripheral edge 24 is formed at an edge formed between the contour of such major groove 31 and the peripheral side surface 10s of the head 10 (see Fig. 1, etc.). The n^{th} minor groove 32ₙ is arranged ahead of the major groove 31 in the rotating direction (see Fig. 2). For example, when there are two minor grooves 32, a first minor groove 32₁ is located ahead of the major groove 31 in the rotating direction, and a second minor groove 32₂ is located ahead of the first minor groove 32₁ in the rotating direction (see Figs. 6 and 7).

The major groove 31 is formed so as to have a helix angle α. The n^{th} minor groove 32 is formed so as to have a helix angle βₙ. The helix angles α and βₙ have magnitudes that are different from each other. In addition, the helix angles α and βₙ have a relationship of α < βₙ, and when, for example, there is only one minor groove 32 (n=1), the helix angle β₁ of the first minor angle 32₁ is greater than the helix angle α of the major groove. When there are two or more minor grooves 32, the helix angle β₍ₙ₊₁₎ of the (n+1)^{-th} minor groove 32₍ₙ₊₁₎ is greater than the helix angle βₙ of the n^{th} minor groove 32ₙ (see Figs. 6, 7, etc.). By constituting the chip discharge groove 30 from multiple grooves (the major groove 31 and the minor grooves 32ₙ), the contact area between the chips and the chip discharge groove 30 becomes small, and therefore even better chip control can be expected.

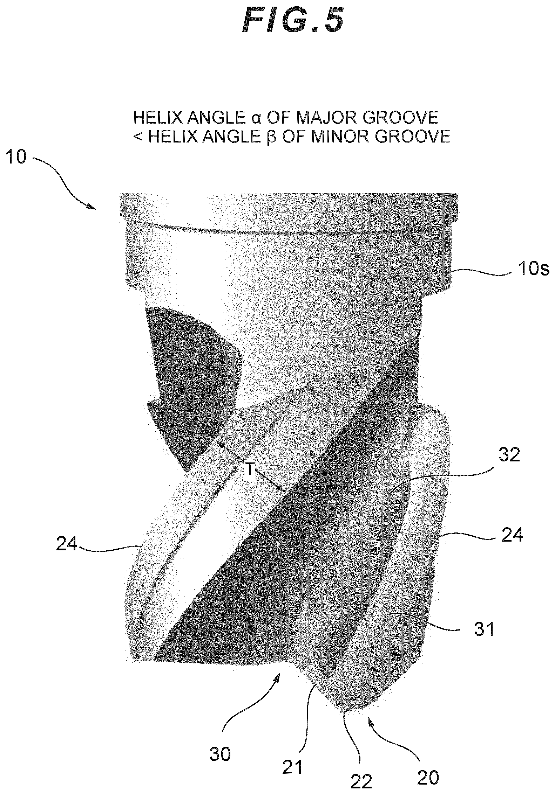

The following description will describe the characteristics of the end mill 1 having the chip discharge groove 30 that is constituted by the major groove 31 and the minor groove 32 as described above. Here, in order to facilitate understanding by simplifying the description of its structure, the following description will assume that there is one minor groove 32 (n=1) (see Fig. 5). In this case, in the head 10 of the end mill 1, each of the plurality of discharge grooves 30 is constituted by two grooves (the major groove 31 and the minor groove 32) which have different helix angles (α, β₁), where the magnitudes of the helix angles satisfy the relationship of α < β₁. In other words, the major groove 31 constitutes a so-called "low helix," whereas the minor groove 32 constitutes a so-called "high helix"; therefore, in the head 10 having the chip discharge grooves 30 configured as described above, even if the length of the chip discharge groove 30 is set so as to be relatively long, the minor groove 32 will not interfere with a circumferential flank of the peripheral edge 24 that is located ahead of such minor groove 32 in the tool rotating direction (see Fig. 5).

In general, the stiffness of the peripheral edge 24 is affected by a thickness T between the major groove 31 that forms the peripheral edge 24 and the minor groove 32 that is arranged behind the peripheral edge 24 in the rotating direction (i.e., the thickness of the back metal). In the above-described head 10 of the present embodiment, the magnitudes of the respective helix angles of the major groove 31 and the minor groove 32 satisfy the relationship of helix angle α < helix angle β₁; therefore, even in the case where the length of the chip discharge groove 30 is relatively long, the minor groove 32 does not interfere with the flank 24f of the peripheral edge 24 that is located ahead of the minor groove 32 in the rotating direction as it approaches the base end 10b, and the thickness T of the back metal of the cutting edge 20 instead increases as it approaches the base end 10b (see Fig. 5). Thus, in such head 10, the thickness T is maintained so as to have a certain value or greater in a range from a leading end (an end on the leading end 10t side) of the peripheral edge 24 to a base end (an end on the base end 10b side of the head 10) of the peripheral edge 24, and it becomes possible to suppress the generation of chattering during machining even in, for example, machining with a large cutting depth. In addition, since the length of the minor groove 32 can be set so as to be long, it becomes possible to secure a large cross-sectional area of the chip discharge groove 30 even in a portion of the peripheral edge 24 that is near the base end 10b. Therefore, even in machining with a large cutting depth in which the peripheral edge 24 is used to the maximum extent of its length, it is still possible to achieve good chip control (see Fig. 5).

### [Example Shape of Major Groove and Minor Groove]

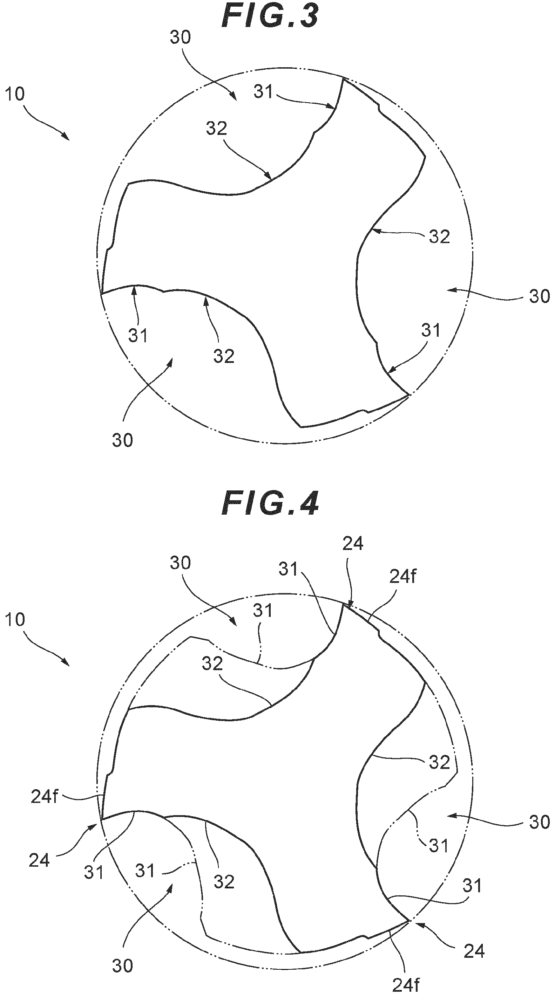

Fig. 3 shows, for reference, an example of the cross-sectional shape of the end mill 1 at a distance corresponding to 50% of the tool diameter from the leading end surface S1 along the central axis 10A. The shape of a groove bottom surface of each of the major groove 31 and the minor groove 32 is as shown in the diagram (see Fig. 3). In addition to the cross-sectional shape shown in Fig. 3, Fig. 4 shows, for reference, a cross-sectional view which shows a comparison between the shapes of the end mill 1 before and after the formation of the minor groove 32.

### [Specific Example of Helix Angles α, βₙ, etc.]

A specific example of the helix angles α, βₙ, etc. in the head 10 of the present embodiment will now be described below.

In the case of a so-called "three-edge head" 10 provided with three cutting edges 20 (here, the three cutting edges 20 will be referred to as "the first cutting edge," "the second cutting edge" and "the third cutting edge," respectively) and having an outer diameter of 10 mm, preferred examples of the helix angle α of the major groove 31 and the helix angle β of a single minor groove 32 include the following.

**[Table 1]**

| | First Cutting Edge | Second Cutting Edge | Third Cutting Edge |
|---|---|---|---|
| Helix Angle α | 39° | 40° | 41° |
| Helix Angle β | 41° | 42° | 43° |

- When the peripheral edge 24 is formed so as to have a length of 75% of the tool diameter, from the leading end surface S1 along the central axis 10A, it is preferable for the major groove 31 to be formed so as to have a length of 90% of the tool diameter, from the leading end surface S1 along the central axis 10A.
- When the minor groove 32 is formed so as to have a length of 110% of the tool diameter, from the leading end surface S1 along the central axis 10A, it is preferable for a recessed part of the minor groove 32 to be arranged such that a core thickness CT is 30% of the tool diameter in a cross-section at a distance corresponding to 50% of the tool diameter from the leading end surface S1 along the central axis 10A. It should be noted that, when a test was conducted using a sample whose core thickness CT was 38% of the tool diameter, it was confirmed that chips could not be discharged in a favorable way (see Fig. 3).
- It is preferable that the relationship of the length of the peripheral edge 24 ≤ the length of the major groove 31 < the length of the minor groove 32ₙ is satisfied. Such configuration makes it possible to secure a large cross-sectional area of the chip discharge groove 30 even at the base end (the end near the base end 10b side of the head 10) of the peripheral edge 24, and thus makes it possible to achieve good chip control even under cutting conditions involving a large cutting depth.

Although the above-described embodiment is an example of preferred implementations of the present disclosure, the present disclosure is not limited thereto, and various modifications may be made without departing from the gist of the present disclosure. For example, as has already been stated earlier, although the above description has described the case where the present disclosure is applied to an end mill, the present disclosure may also be applied to other cutting tools than the end mill, as long as such cutting tools are of the type that rotate around a central axis.

In addition, although the above description has mainly described an embodiment in which the number of the minor grooves 32ₙ is one (n=1) or two, such configuration is merely a preferred example, and the number of the minor grooves is not limited thereto. It should be noted that, the larger the number of minor grooves 32ₙ becomes, the larger the region of the chip discharge groove 30 becomes, so that the chip discharge control will be further improved.

The present disclosure is suitable for use in a cutting tool, such as an end mill.

## Claims

1. A cutting tool that rotates around a central axis, the cutting tool comprising:
an end cutting edge that is formed so as to extend from a side of the central axis in a radial direction of the cutting tool, in a leading end-side view which is viewed from a leading end of the cutting tool;
a peripheral edge that forms a pair of cutting edges with the end cutting edge, the peripheral edge extending from the leading end toward a base end of the cutting tool; and
a chip discharge groove provided around the central axis,
wherein the chip discharge groove is formed by two or more grooves that include at least a major groove and a minor groove and have different helix angles from each other,
wherein the major groove that forms the peripheral edge on an edge between a peripheral side surface of the cutting tool and such major groove has a smallest helix angle, and the minor groove that is in contact with the major groove and arranged with its phase shifted forward with respect to the major groove in a tool rotating direction has a helix angle that is greater than the helix angle of the major groove.

2. The cutting tool according to claim 1, wherein an (n+1)^{-th} minor groove that is in contact with an n^{th} minor groove and arranged with its phase shifted further forward with respect to the n^{th} minor groove in the tool rotating direction has a helix angle that is greater than a helix angle of the n^{th} minor groove, wherein n is a natural number.

3. The cutting tool according to claim 1 or 2, wherein the end cutting edge and the peripheral edge are connected to each other by a corner cutting edge that is constituted by a curved cutting edge.

4. The cutting tool according to claim 1, 2, or 3, wherein the end cutting edge and the peripheral edge are connected to each other by a corner cutting edge that is constituted by a chamfered cutting edge.

5. The cutting tool according to any one of claims 1 to 4, wherein the end cutting edge extends rearward from a leading end side toward a base end side of the cutting tool as it extends from a peripheral side of the cutting tool toward a center of the cutting tool, in a side view in which the end cutting edge oriented with its rake surface located in front is viewed from a direction perpendicular to the central axis.

6. The cutting tool according to any one of claims 1 to 4, wherein the end cutting edge is formed so as not to extend beyond the central axis in the leading end-side view.

7. The cutting tool according to any one of claims 1 to 4, wherein the end cutting edge extends linearly in the radial direction in the leading end-side view.

8. The cutting tool according to any one of claims 1 to 4, wherein the end cutting edge extends in a concave shape along the radial direction in the leading end-side view.

9. The cutting tool according to any one of claims 1 to 4, wherein the head is removably mountable to a shank.
